# EUROPEAN PATENT APPLICATION

(11) **EP 2 755 147 A1**
(43) Date of publication of application: **16.07.2014**
(21) Application number: 13151114.9
(22) Date of filing: 14.01.2013
(51) Int. Cl.: G06F 17/30

(54) **A method of using a semantic web data source in a target application**

(71) Applicant: Agfa Healthcare, 2640 Mortsel (BE)
(72) Inventor: De Vloed, Boris, 2640 Mortsel (BE); Depraetere, Kristof, 2640 Mortsel (BE); Colaert, Dirk, 2640 Mortsel (BE)

(57) **Abstract**

A method of using a semantic web data source in a target application wherein
- said target application calls the application program interface of a bridge component,
- said bridge component retrieves the required data from the semantic web data source, translates the retrieved data semantically and syntactically to reflect the meaning and syntax of the target application and returns the translated data in the format of the target application.

## Description

### FIELD OF THE INVENTION

The present invention relates to using a semantic web data source by an application which either is a semantic web unaware application or uses different semantics.

### BACKGROUND OF THE INVENTION

In recent years there has been a transition from hospital information systems for administrative purposes towards more dedicated clinical information systems to support clinical workflow and decision making.

Clinical data are not only stored in hospitals, but also at general practices, private specialists' practices and other healthcare environments, for example homes for the elderly. Many new data sources will have to be integrated to improve data quality or to provide specific information.

As the patients and their clinical data are central to the healthcare system and economics become more important it is imperative to connect different data sources, not only on individual patient level but also on population level to perform e.g. epidemiological studies to support policy making.

Data storage in one information system differs a lot from another system's storage model. The databases have very variable schemas, i.e. the meaning or semantics of their data differs a lot.

For example in Agfa HealthCare's clinical information management system named ORBIS, there is besides a denomination 'natural person' also a denomination 'patient'. Another clinical information system does not necessarily make this distinction.

This is achieved by expressing data in a formal language of which the semantics are clear, i.e. specified by a model theory (being based on first order logic and set theory (mathematics)) limiting the interpretation of the semantics and eliminating ambiguity.

The World Wide Web Consortium (W3C) paved the way to realize this by initiating the Semantic Web in 2001.

The Semantic Web technology comprises global formal languages to express formal data and other resources such as ontologies to capture clinical and non-clinical domain knowledge, and rules which are used by a reasoner to convert semantics and analyze/synthesize formal data.

Numerous applications exist which are not grounded on the semantic web, meaning that these applications cannot natively use semantic web data. Furthermore applications with similar functionality define their own application specific model. These applications could store similar information but express it in a different way.

Commonly in the semantic web environment an RDF (Resource Description Framework) query language such as SPARQL is used. However, if existing applications lack support for this type of query languages they cannot benefit from the semantic data source. Likewise, if a semantic gap is experienced between the semantics used in the data source and the semantics used by an application, the application cannot benefit from the semantic data source as such either.

It is an aspect of the present invention to overcome the above-described problems.

### SUMMARY OF THE INVENTION

The above-mentioned aspects are realized by a method having the specific method steps set out in claim 1. Specific features for preferred embodiments of the invention are set out in the dependent claims.

Further advantages and embodiments of the present invention will become apparent from the following description and drawings.

The invention provides a method to bridge the semantic gap between semantic web data source ontologies and application ontologies, which can be a formal representation of the data base schema of the application.

The means provided to bridge the above gap are referred to as 'semantic web data source application bridge' (SDSAB).

By the terms 'a semantic web data source' is meant in the context of the present invention a data source which represents data in RDF.

Examples of such a semantic web data source is a semantic data warehouse such as described in co-pending European patent application filed September 3, 2012.

Alternatives are a SPARQL end point implemented as a semantic layer on a non-semantic data source or a triple store (a dedicated RDF/semantic data store), a query service on an RDF data source, a RDF data source, etc.

Processing is performed to retrieve the required data from the semantic web data source(s), translate the data semantically and syntactically to reflect the meaning and syntax of the target application.

Data are returned in the format of the target application so that a specific representation is provided of the semantic web data source data which is adapted to the target application.

The present invention is advantageous in that it provides access to a semantic web data source for different types of applications.

### BRIEF DESCRIPTION OF THE DRAWINGS

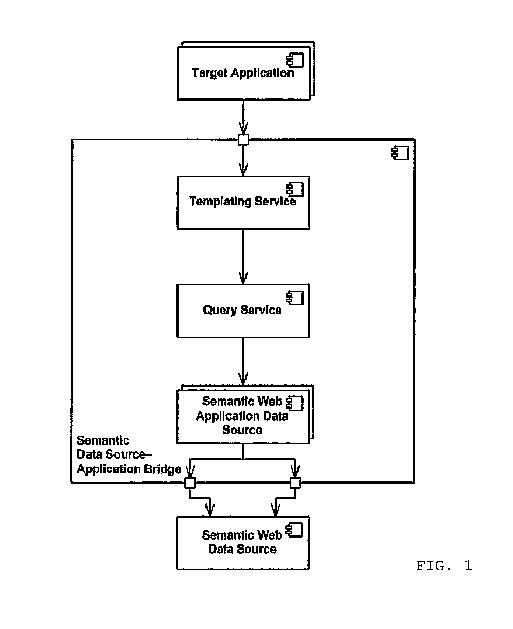

Fig. 1 shows a bridge component as used in the method of the present invention,
Fig. 2 illustrates the use of a bridge component in the context of a semantic data warehouse as data source.

### DETAILED DESCRIPTION OF THE INVENTION

A specific embodiment of the present invention will be explained below with reference to the querying of data from a semantic data warehouse by a querying target application such as a business intelligence tool (BI tool) that does not natively support semantic web technologies such as SPARQL and/or RDF.

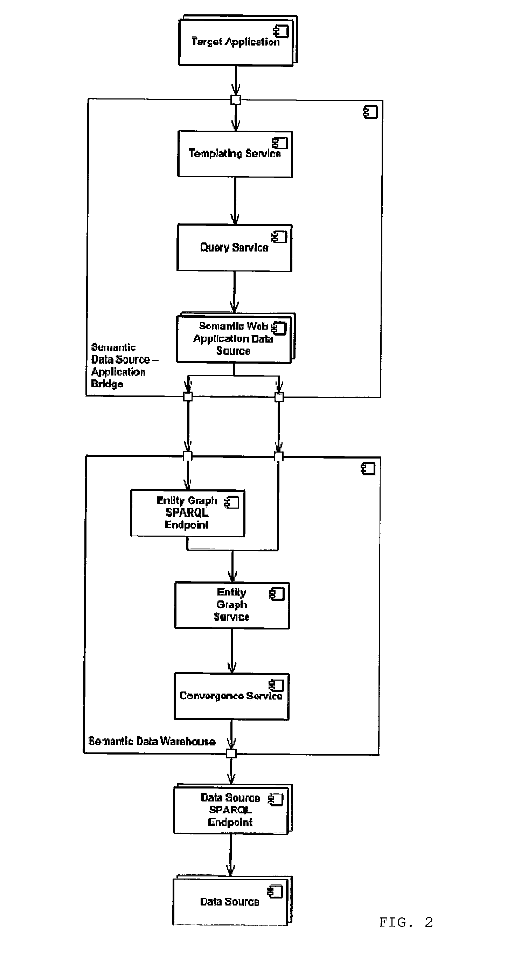

A data warehouse applicable in the present invention is shown as part of figure 2 and mainly consists of a convergence service and an entity graph service, the latter being arranged to be able to invoke the convergence service. The convergence service is connected to a number of databases through SPARQL endpoints enabling to query knowledge databases via the SPARQL language.

The convergence service is responsible for:
- The configuration of multiple domains, i.e. the needed Data Definition Ontology (DDO), a formal representation of a data structure, to Domain Ontology (DO) mapping files for each of the data sources, the data source locations and their respective needed access credentials.
- Invoking the referenced DDO queries on the SPARQL endpoint of the corresponding data source.
- Loading the needed DDO to DO conversion rules for the specified domain.
- Converting the DDO data to DO for each source using the loaded DDO to DO conversion rules.
- Aggregating the converted results from the specified data sources.
- Returning the aggregated and converted data set.

In a specific embodiment the convergence service is implemented as a SPARQL endpoint exposed as a web service.

The convergence service uses conversion rules to perform the DDO to DO mapping.

Conversion services are known in the art. However in order to be able to operate in an open environment a caller would need to specify the required sources to solve a query which could lead to a breach of abstraction. To solve this problem the concept of entity graphs and entity graph service was introduced.

An entity is the DO concept that is the main subject of the graph, i.e. it is the centre of the graph and this subject is connected to other objects. The entity graph comprises subject, properties and objects. It is the responsibility of the designer of the entity graph to decide which subject, properties and objects that are deemed relevant to be mentioned in the graph.

In this embodiment an entity graph is a named entity graph, i.e. the entity is assigned an URI. When resolving the URI, because it is in fact an HTTP URL, a target application can retrieve the full entity graph.

The named graphs are constructed on-demand when their URIs are resolved by invoking the convergence service to query and transform the data.

The entity representations are stated as RDF and for example serialized using the N-Triples, Turtle, Notation3 (N3) or RDF/XML formats.

In one embodiment a target application using the entity graph SPARQL endpoint can issue SPARQL queries on an entity graph as a data graph to query for specific data.

However, if a target application is not aware of semantic or RDF technology or if there is a semantic gap between domain ontologies used in the data warehouse and the semantics of the target application, the target application cannot benefit from the semantic data warehouse.

In order to solve these problems the present invention provides a so-called 'bridge' between the semantic data source and the target data consuming application. Below will be described which steps need to be performed at development and how the bridge is used at runtime.

At development time:
At development time configuration steps need to be performed as described below.

First, identify data source and target application
a. Select the data from the data source which is relevant for the target application
b. Express the target application semantics using a target application ontology if needed

Next, the different mappings from the identified semantic data source to the identified target application ontologies are defined. If needed a syntactic mapping is defined too. E.g. a simple example of a semantic mapping is the calculation of the age, used in the target application, from the birth date exposed by the data source and the current date. An example of a syntactic translation is the way a human gender is expressed in different applications. In i2b2 the default expression is "DEM|SEX:F" for female, in other applications it is often "F".

The result of these steps at development time is a set of rules and ontologies which can e.g. be published on the web so that it is available for the bridge when required at runtime.

At Runtime:
The process at runtime consists of two parts: discovery and query.

At discovery:
The discovery part can be implemented semi-automatically as described below. Alternatively the discovery part can be documented as a query functionality description and provided to a mediator or can be hard coded in the target application.

A mediator is an application which connects to the application bridge API and transfers the data from the data source to the target application and thus can be used when the target application itself cannot be changed.

In the semi-automatic embodiment, the target application first calls an application bridge discovery web API.

The discovery API returns a list of possible target applications and potential target application modules.

Next, the target application selects one of these target applications or one of these target application modules. Upon selection of an application or module, a description is returned of the URL of the bridge service. This description mentions for example the possible parameters that can be specified for the query parameters of the URL to scope the amount of data, e.g. a date range to limit the data to a certain period.

When querying:
The following steps are performed when a target application wants to retrieve data from a semantic web data source.

First the target application calls the web API of the bridge component (for example a REST interface, RPC (remote procedure call) or SOAP).

The call specifies the kind of data, i.e. which target application table the ultimate result of the query should reflect and optionally specifies a scope such as, for example, a date period for which to retrieve data.

The bridge component determines which SPARQL query template expressed in application ontology terms to use and determines the template's bindings from the request by the target application.

Next, the bridge component identifies which semantic web application data source(s) to use. A semantic web application data source is a representation of a semantic web data source expressed in the target application ontology terms. This semantic web application data source bridges the gap between the target application and the semantic web data source by translation concepts from the source data into concepts understood by the target application. When applicable, a syntactic transformation is performed, e.g. a target application might use the same coding system as the data source but represents these codes in a different way. The WHO International Statistical Classification of Diseases and Related Health Problems 10th Revision (ICD10) encodes cholera as A00, to be usable in i2b2, this code has to be prefixed with ICD10 as ICD10:A00.

Next it substitutes the selected template variables with the determined bindings and executes the SPARQL query on the semantic web application data source to retrieve the data, when applicable, within the defined scope. Finally, when applicable, a syntactic transformation is performed, e.g. a target application might use the same coding system as the data source but represents code in a different way.

When the data of the semantic web application data source is retrieved by resolving the associated URL, the source data from the semantic data source is retrieved. This source data is translated to the target application ontology terms as described above.

The result of the previous steps is a semantic web application data source which now contains the result of the previous steps in application ontology terms.

Then the semantic web application data source is queried to retrieve data with the application ontology semantics and syntax.

Semantic web target applications can directly consume this RDF result. Alternatively this result can be serialized as a delimiter separated file (DSV file). Examples of such delimiter separated file formats are comma separated files (CSV), tab separated files (TSV), etc. This type of file format is often used for its simplicity and its very broad support as an import format.

Alternative data serialization techniques exist, e.g.: xml, JSON, etc.

The resulting application data can thus be retrieved by the target application directly from the bridge, by a mediator which loads the data into the target application or a combination of both wherein an application imports the data provided by the mediator.

The above explanation was given with reference to a SPARQL query but is not limited to this type of queries.

Having described in detail preferred embodiments of the current invention, it will now be apparent to those skilled in the art that numerous modifications can be made therein without departing from the scope of the invention as defined in the appending claims.

## Claims

1. A method of using a semantic web data source in a target application wherein
- said target application calls the application program interface of a bridge component,
- said bridge component retrieves the required data from the semantic web data source, translates the retrieved data semantically and syntactically to reflect the meaning and syntax of the target application and returns the translated data in the format of the target application.

2. A method according to claim 1 wherein said bridge component executes the steps of
- determining an RDF query language template expressed in application ontology terms to use,
- determining said template's bindings for variables from a request by said target application,
- identifying a semantic web application data source,
- substituting said template variables with said bindings in said query template,
- executing a query specified in said RDF query language by,
- resolving said semantic web application data source, and
- determining the query result.

3. A method according to claim 2 wherein said resolving of said semantic web application data source comprises the steps of:
- retrieving semantic source data from said semantic web data source,
- translating said semantic source data to a target application ontology.

4. A method according to claim 2 wherein said query result is serialized to a Delimiter Separated File.

5. A method according to claim 1 wherein said calling of the application program interface of said bridge component is performed by a mediator, that requests said data from the application bridge and provides the data to said target application.
